# EUROPEAN PATENT SPECIFICATION

(11) **EP 3 304 987 B1**
(45) Date of publication and mention of the grant of the patent: **26.02.2020**
(21) Application number: 16820739.7
(22) Date of filing: 21.06.2016
(51) Int. Cl.: H04L 5/00, H04W 72/12, H04L 1/18, H04W 76/15

(54) **MULTIPOINT RADIO LINK CONTROL (RLC) COORDINATOR FOR LOOSELY COORDINATED MULTIPOINT COMMUNICATIONS**
KOORDINATOR EINER MEHRPUNKT-FUNKVERBINDUNGSSTEUERUNG (RLC) FÜR LOSE KOORDINIERTE MEHRPUNKTKOMMUNIKATIONEN
COORDINATEUR DE COMMANDE DE LIAISON RADIO MULTIPOINT (RLC) PERMETTANT DES COMMUNICATIONS MULTIPOINTS COORDONNÉES LIBREMENT

(30) Priority: 07.07.2015 US 201514792790
(43) Date of publication of application: 11.04.2018
(73) Proprietor: Huawei Technologies Co., Ltd., Longgang District Shenzhen, Guangdong 518129 (CN)
(72) Inventor: LEROUX, Philippe, Ottawa, Ontario K1L 7S5 (CA); CALLARD, Aaron, Ottawa, Ontario K2B 7C4 (CA); SENARATH, Nimal Gamini, Ottawa, Ontario K2G 6P5 (CA)
(74) Representative: Thun, Clemens
(86) International application number: PCT/CN2016/086573
(87) International publication number: WO 2017/005088

(56) References cited:
- WO-A1-2014/139588
- CN-A- 102 098 725
- CN-A- 102 497 252
- CN-A- 102 742 338
- CN-A- 104 584 633
- US-A1- 2012 163 161
- US-A1- 2012 163 315
- US-A1- 2014 321 282

## Description

### TECHNICAL FIELD

The present invention relates generally to managing the allocation of resources in a network, and in particular embodiments, to techniques and mechanisms for multipoint Radio Link Control (RLC) coordinator for loosely coordinated multipoint communications.

### BACKGROUND

Traditionally, radio access links between access points (APs) and mobile devices have been the bottleneck that constrains throughput between the mobile devices and the core network, as data rates over backhaul network connection between the radio access network (RAN) and the core network are typically many times faster than data rates over the corresponding wireless access links.

Document US20120163161 A1 discloses a method and apparatus for wireless communication that may provide a multi-link RLC sublayer in an RNC capable of allocating RLC PDUs among a plurality of MAC entities for use in a Multi-Point HSDPA network. In D1 issues relating to out-of-order delivery of the RLC PDUs to a UE, such as unnecessary retransmissions, are also disclosed. That is, the disclosed multi-link RLC may be capable of distinguishing between sequence number gaps that are caused by physical layer transmission failures and those caused merely by skew.

Document US20140321282 A1 discloses a method including: transmitting and receiving data to and from one or more wireless transmit/receive units (WTRUs) via an underlay system access link. The underlay system is non-standalone, and control information is provided from an overlay system. An underlay base station is linked to other underlay base stations to implement a mesh backhaul. The method also includes transmitting and receiving at least a portion of the data to or from an overlay base station via backhaul links and receiving control data from the overlay base station.

However, next-generation network architectures having densely deployed cells may achieve significant increases in throughput, as well as share backhaul network resources amongst greater numbers of APs. As a result, the capacity gap between radio access links and backhaul network connection may be reduced in some next-generation network implementations, resulting in situations where data forwarding rates are constrained by the backhaul network connection, rather than the radio access link. Accordingly, techniques for efficiently utilizing backhaul resources in next-generation densely-deployed networks are desired.

### SUMMARY OF THE INVENTION

Technical advantages are generally achieved by embodiments of this disclosure which describe multipoint RLC coordinator for loosely coordinated multipoint communications.

This problem is solved by the subject matter of the independent claims. Further implementation forms can be found in the dependent claims, which represent particular embodiments thereof. In the following use of the word "embodiment" has to be understood as an "example" auxiliary in explanation of the invention whenever in contrast with the actual definition provided in the claims.

In accordance with an embodiment, a method for efficiently utilizing backhaul resources during multipoint reception is provided. In this example, the method includes identifying access points receiving a wireless transmission in accordance with a multipoint reception scheme. Lower-layer decoding of the wireless transmissions is performed by the access points to obtain transport blocks carried by the wireless transmission. Radio link control (RLC) layer decoding of the transport blocks is performed at a network node to obtain data packets carried by the wireless transmission. The method further includes scheduling the transport blocks to be communicated from the access points over backhaul links to the network node. An apparatus for performing this method is also provided.

In accordance with another embodiment, a method for efficiently utilizing backhaul resources is provided. In this example, the method includes receiving a wireless transmission from a user equipment at an access point, and performing lower layer decoding on the wireless transmission to obtain transport blocks carried by the wireless transmission. The method further includes receiving a scheduling instruction for communicating the transport blocks over a backhaul link, and communicating the transport blocks over the backhaul link in accordance with the scheduling instruction. Radio link control (RLC) layer decoding of the transport blocks is performed at a network node to obtain data packets carried by the wireless transmission. An apparatus for performing this method is also provided.

In accordance with yet another embodiment, a method for coordinating access to limited backhaul resources is provided. In this example, the method includes identifying access points in a wireless network. The access points perform lower-layer decoding on wireless transmissions to obtain at least a first set of transport blocks and a second set of transport blocks carried by the wireless transmissions. Radio link control (RLC) layer decoding of the first set of transport blocks is performed at a first network node, and RLC layer decoding of the second set of transport blocks is performed at a second network node. The method further includes scheduling a shared backhaul link to carry transport blocks destined for the first network node or the second network node, wherein the shared backhaul link is capable of carrying transport blocks in the first set of transport blocks at least partially to the first network node and carrying transport blocks in the second set of transport blocks at least partially to the second network node. An apparatus for performing this method is also provided.

### BRIEF DESCRIPTION OF THE DRAWINGS

For a more complete understanding of the present disclosure, and the advantages thereof, reference is now made to the following descriptions taken in conjunction with the accompanying drawings, in which:
FIG. 1 illustrates a diagram of an embodiment wireless communications network;
FIGS. 2A-2B illustrate diagrams of embodiment wireless networks for efficiently scheduling transport blocks (TBs) over backhaul resources;
FIG. 3 illustrates a diagram of a protocol stack of a wireless transmission
FIG. 4 illustrates a flowchart of an embodiment method for scheduling TBs over backhaul resources;
FIG. 5 illustrates a flowchart of an embodiment method for communicating or processing TBs in accordance with a scheduling instruction;
FIG. 6 illustrates a diagram of an embodiment wireless network for strategically scheduling TBs over a shared backhaul link;
FIGS. 7A-7C illustrate protocol diagrams of embodiment communication sequences for coordinating the scheduling of TBs over a shared backhaul link;
FIG. 8 illustrates a flowchart of an embodiment method for scheduling TBs over a shared backhaul link;
FIG. 9 illustrates a block diagram of an embodiment processing system; and
FIG. 10 illustrates a block diagram of an embodiment transceiver.

Corresponding numerals and symbols in the different figures generally refer to corresponding parts unless otherwise indicated. The figures are drawn to clearly illustrate the relevant aspects of the embodiments and are not necessarily drawn to scale.

### DETAILED DESCRIPTION OF ILLUSTRATIVE EMBODIMENTS

The making and using of embodiments of this disclosure are discussed in detail below. It should be appreciated, however, that the concepts disclosed herein can be embodied in a wide variety of specific contexts, and that the specific embodiments discussed herein are merely illustrative and do not serve to limit the scope of the claims. As used herein, the term "transport block" refers to payload data, or copies of payload data (e.g., replicating decoded data stored in a buffer), carried over the physical layer of a wireless network. For example, in a long term evolution (LTE) network, a transport block refers to a media access control (MAC) protocol data unit (PDU), or a copy of a MAC PDU, carried in the physical downlink shared channel (PDSCH) and/or physical uplink shared channel (PUSCH).

In conventional networks, access points communicate uplink data over dedicated backhaul resources as soon as the uplink transmissions are received over the access network. This is possible because conventional networks typically have significantly more available resources in the backhaul network than the access network. Next-generation densely-deployed networks may not have such an abundancy of available backhaul resources due to higher data rates over the access network as well as due to the sharing of backhaul resources amongst greater numbers of access points. Consequently, the opportunistic use of backhaul resources may reduce efficiency and/or performance in next-generation densely-deployed networks. Indeed, the opportunistic use of backhaul resources may be particularly costly for access points participating in multi-point reception, as it may cause the access points to unnecessarily communicate redundant uplink data over the backhaul network. Accordingly, techniques for efficiently utilizing backhaul resources in next-generation densely-deployed networks are desired.

Aspects of this disclosure improve backhaul resource utilization efficiency by performing lower-layer decoding of uplink transmissions at access points to obtain transport blocks (TBs) carried by the uplink transmissions, and then strategically scheduling the TBs over backhaul links extending between the access points and network nodes. Upon reception, the network nodes may perform radio link control (RLC) decoding on the TBs to obtain the uplink data. Performing lower-layer decoding at the access points offers efficiency advantages over conventional techniques that opportunistically communicate the entire uplink media access control (MAC) physical data unit (PDU) over the backhaul network, as the TBs (e.g., radio link control (RLC) PDUs) obtained from the lower layer decoding have less overhead than the MAC PDUs carried by the uplink physical-layer transmissions. Moreover, scheduling the TBs over the backhaul links provides additional efficiency/performance benefits. For example, TBs may be scheduled in a manner that prioritizes time-sensitive data (e.g., voice traffic). As another example, TBs may be scheduled in a manner that strategically routes TBs over backhaul paths in a manner that increases the overall utilization of backhaul resources, e.g., TBs may be re-routed over an alternate path to allow other TBs to be transported over a primary path. Additionally, in the context of multi-point reception, it may be possible to avoid unnecessarily transporting redundant TBs over backhaul links. These and other aspects are described in greater detail below.

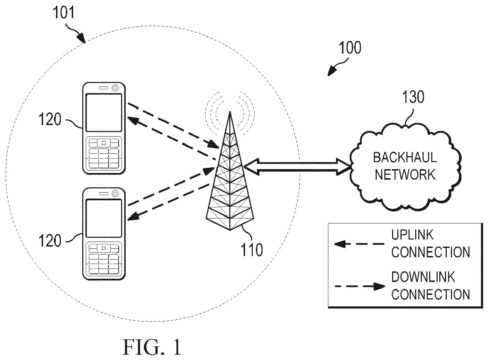

FIG. 1 illustrates a wireless network 100 for communicating data. The network 100 comprises an access point 110 having a coverage area 101, a plurality of mobile devices 120, and a backhaul network 130. As shown, the access point 110 establishes uplink (dashed line) and/or downlink (dotted line) connections with the mobile devices 120, which serve to carry data from the mobile devices 120 to the access point 110 and vice-versa. Data carried over the uplink/downlink connections may include data communicated between the mobile devices 120, as well as data communicated to/from a remote-end (not shown) by way of the backhaul network 130. As used herein, the term "access point" refers to any component (or collection of components) configured to provide wireless access to a network, such as an evolved NodeB (eNB), a macro-cell, a femtocell, a Wi-Fi access point (AP), or other wirelessly enabled devices. Access points may provide wireless access in accordance with one or more wireless communication protocols, e.g., long term evolution (LTE), LTE advanced (LTE-A), High Speed Packet Access (HSPA), Wi-Fi 802.11a/b/g/n/ac. As used herein, the term "mobile device" refers to any component (or collection of components) capable of establishing a wireless connection with a access point, such as a user equipment (UE), a mobile station (STA), and other wirelessly enabled devices. In some embodiments, the network 100 may comprise various other wireless devices, such as relays, and low power nodes.

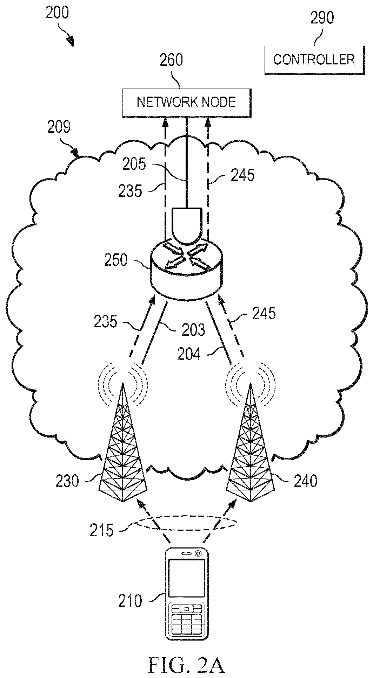

FIGS. 2A-2B illustrate embodiment wireless networks 200 for efficiently scheduling TBs over backhaul resources. FIG. 2A illustrates an embodiment wireless network 200 in which access points (APs) 230, 240 are configured to receive a wireless transmission 215 from the mobile device 210 in accordance with a multi-point reception scheme. As shown, the wireless network 200 includes a backhaul network 209 for communicating data between access points (APs) 230, 240 and a network node 260. The backhaul network 209 includes an intermediate node 250 positioned in between the network node 260 and the APs 230, 240, as well as backhaul links 203, 204 interconnecting the APs 230, 240 to the intermediate node 250, and a backhaul link 205 interconnecting the intermediate node 250 to the network node 260. The backhaul links 203 and 205 form a backhaul path 235 from the AP 230 to the network node 260. Likewise, the backhaul links 204 and 205 form a backhaul path 245 from the AP 240 to the network node 260. The backhaul link 205 is shared between the backhaul paths 235, 245 extending between the APs 230, 240 and the network node 260

In this example, the APs 230, 240 are configured to receive a wireless transmission 215 from the mobile device 210 in accordance with a multi-point reception scheme. The APs 230, 240 perform lower layer decoding on the wireless transmission 215 to obtain TBs carried by the wireless transmission 215. The APs 230, 240 communicate the TBs over the backhaul paths 235, 245 to the network node 260, which performs RLC decoding on the TBs to obtain uplink data. Notably, TBs (e.g., MAC PDUs) may carry radio link control (RLC) physical data units (PDUs). Accordingly, the network node 260 may decode the TBs to obtain RLC PDUs.

The network node 260 may schedule TBs to be communicated over the backhaul paths 235, 245 by sending periodic and/or aperiodic control signaling the APs 230, 240. In one embodiment, the network node 260 sends a "send" instruction to at least one of the APs 230, 240. The send instruction instructs the recipient AP to send one or more TBs over one of the backhaul paths. The send instruction may identify a particular TB or group of TBs. In one example, the send instruction identifies a particular data stream associated with a group of TBs. For instance, each data stream may be associated with a different hybrid automatic repeat request (HARQ) process, and the send instruction may specify an identifier associated with a given HARQ process to identify the corresponding data stream. In such an example, the send instruction may instruct the recipient AP to send all TBs (e.g., all buffered and future TBs) associated with the identified data stream over the backhaul path. Alternatively, the send instruction may instruct the recipient AP to send a specific TB (e.g., TB X) or a specific subset of TBs (e.g., TBs X, Y, and Z) in the identified data stream over the backhaul path. As yet another alternative, the send instruction may instruct the recipient AP to send TBs up until a certain TB (or bit) in the identified data stream over the backhaul path, e.g., send TBs preceding TB Y in the data stream, send TBs between TB X and TB Z in the data stream. In another example, the send instruction may instruct the recipient AP to send all buffered and/or future TBs (e.g., for all data streams) over the backhaul path.

In another embodiment, the network node 260 sends a "hold" instruction to at least one of the APs 230, 240. The hold instruction may instruct the recipient AP to buffer or hold a particular TB or group of TBs for a period without sending the TB or group of TBs over a backhaul pathway. In some embodiments, the period is a defined period specified by the hold instruction. In other embodiments, the period is an indefinite period, e.g., the hold instruction instructs the recipient AP to buffer all TBs until further notice is provided by the network node. In yet another embodiment, the network node 260 sends a "discard" instruction to at least one of the APs 230, 240. The discard instruction may instruct the recipient AP to discard/drop all TBs (e.g., all buffered and future TBs) associated with a particular data stream (e.g., HARQ process), to discard/drop a specific TB (e.g., TB X) or a specific subset of TBs (e.g., TBs X, Y, and Z) associated with a particular data stream, or to discard/drop TBs up until a certain TB (or bit) in the particular data stream, e.g., TBs preceding TB Y in the data stream.

In some embodiments, the controller 290 may schedule TBs to be communicated over the backhaul paths 235, 245. The controller 290 may be any network device adapted to make scheduling decisions, such as a scheduler, a traffic engineering (TE) controller, or a software defined network (SDN) controller.

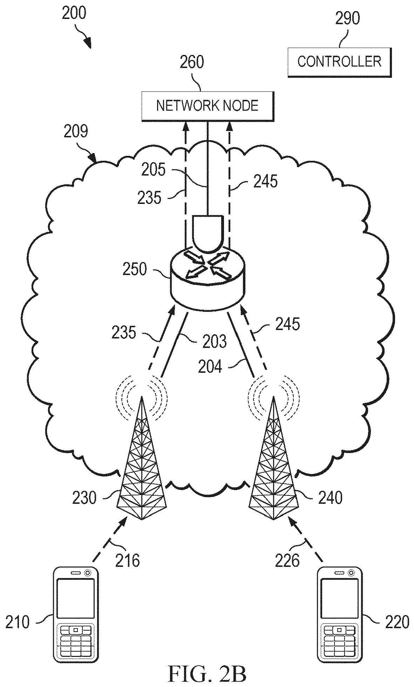

Embodiments may also strategically schedule TBs obtained from wireless transmissions communicated by different mobile devices over backhaul resources. FIG. 2B illustrates the embodiment wireless network 200 in which access points (APs) 230, 240 are configured to receive wireless transmissions 216, 226 from mobile devices 210, 220, respectively. The APs 230, 240 may perform lower-layer decoding on the wireless transmissions 216, 226 to obtain TBs carried by the wireless transmissions, and then communicate the TBs over the backhaul paths 235, 245 in a manner similar to that described above. In some embodiments, the AP 240 receives, and performs lower-layer decoding on, the wireless transmission 216. In this way, the AP 240 may buffer TBs from the wireless transmission 216 so that they are available for purposes of data recovery, e.g., if a fault occurs over the link 203. The AP 230 may perform similar functions (e.g., receive, decode, and buffer TBs) for the wireless transmission 226.

In some embodiments, the network node 260 or the controller 290 schedules TBs over one or more backhaul links 203, 204, 205 indirectly by communicating policy instructions to the access points 230, 240 and/or the intermediate node 250. The policy instructions may govern how TBs are handled. For example, the policy instructions may specify when, and/or under what conditions a TB is to be forwarded over one of the backhaul links 203, 204, 205. Notably, different policies may govern the forwarding of different TBs within the same traffic flow. As another example, the policy instructions may specify how long the TBs are to be buffered prior to being forwarded over one of the backhaul links 203, 204, 205, as well as when, and/or under what conditions, the TB is to be discarded. The policy instructions may also specify different treatments for TBs having different priorities. The policy instructions may be communicated to the access points 230, 240and/or the intermediate node 250 prior to reception of the TBs. For example, the policy instructions may be communicated to the access points 230, 240prior to communication of the wireless transmissions 215, 216, 226, or even before the mobile devices 210, 220 enter the network.

In one embodiment, a policy instruction instructs an access point, or an intermediate node, to send, drop, or buffer a TB when one or more criteria are satisfied. The one or more criteria may correspond to characteristics associated with the individual transport block and/or the traffic flow in general (e.g., priority, size, staleness), conditions of a backhaul link (e.g., congestion), conditions of a wireless link, or combinations thereof. In one example, the policy instruction instructs the intermediate node or the access point to transmit TBs over a backhaul link when the TBs are associated with a priority level that exceeds a threshold. In another example, the policy instruction instructs the intermediate node or access point to buffer or drop TBs that have a priority level that is less than a threshold. Other examples are also possible.

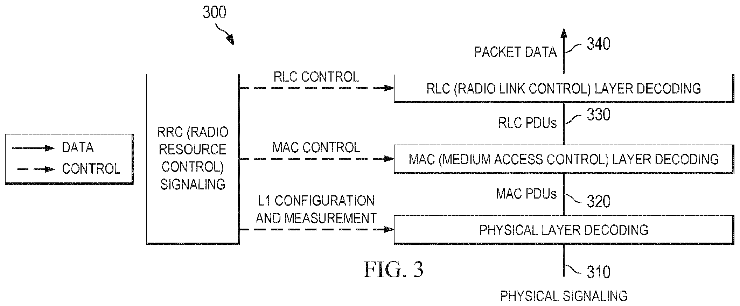

FIG. 3 illustrates a protocol stack 300 of a wireless transmission. The protocol stack 300 includes physical signaling 310, media access control (MAC) physical data units (PDUs) 320, radio link control (RLC) layer PDUs 330, and packet data 340. The physical signaling 310 is a wireless transmission. As shown, physical layer decoding is performed on the physical signaling 310 to obtain the MAC PDUs 320, MAC layer decoding is performed on the MAC PDUs 320 to obtain the RLC PDUs 330, and RLC layer decoding is performed on the RLC PDUs 330 to obtain the packet data 340. Aspects of this disclosure refer to the physical layer decoding and the MAC layer decoding as "lower-layer decoding." The RLC PDUs 330 may be referred to as "transport blocks."

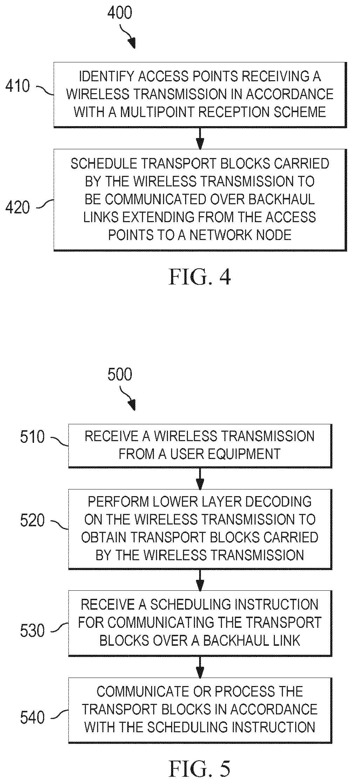

FIG. 4 illustrates a flowchart of an embodiment method 400 for scheduling TBs to be communicated over backhaul resources, as might be performed by a network device (e.g., a network node, a controller). At step 410, where the network device identifies access points receiving a wireless transmission in accordance with a multipoint reception scheme. The access points are configured to perform lower-layer decoding on the wireless transmission to obtain TBs carried by the wireless transmission. At step 420, where the network device schedules the TBs to be communicated over backhaul links extending from the access points to a network node.

In one embodiment, the network device instructs a first access point to communicate all of the TBs to the network node by scheduling the TBs to be communicated over backhaul links extending between the first access point and the network node. In such an embodiment, the network device may instruct other access points participating in the multipoint reception scheme to buffer decoded TBs for a period, e.g., a defined period, or until further notice. If the network node fails to receive one or more of the TBs, then the network device may instruct one of the access points buffering those TBs to communicate the TBs to the network node via corresponding backhaul links. In other embodiments, the network device instructs multiple access points to communicate TBs to the network node.

FIG. 5 illustrates a flowchart of an embodiment method 500 for communicating or processing TBs in accordance with a scheduling instruction, as might be performed by an access point. At step 510, where the access point receives a wireless transmission from a mobile device. At step 520, where the access point performs lower layer decoding on the wireless transmission to obtain TBs carried by the wireless transmission. At step 530, where the access point receives a scheduling instruction for communicating the TBs over a backhaul link. In one embodiment, the scheduling instruction instructs the access point to communicate at least some of the TBs over a backhaul link. In another embodiment, the scheduling instruction instructs the access point to buffer the TBs. In yet another embodiment, the scheduling instruction instructs the access point to drop one or more of the TBs. The scheduling instruction may be communicated to the access point prior to the access point receiving a wireless transmission carrying the TBs. In one example, the scheduling instruction is a policy instruction that is communicated to the access point prior to establishing a wireless link between the AP and the mobile device, e.g., prior to discovery, or between discovery and authentication. At step 540, where the access point communicates, or otherwise processes, the TBs in accordance with the scheduling instruction.

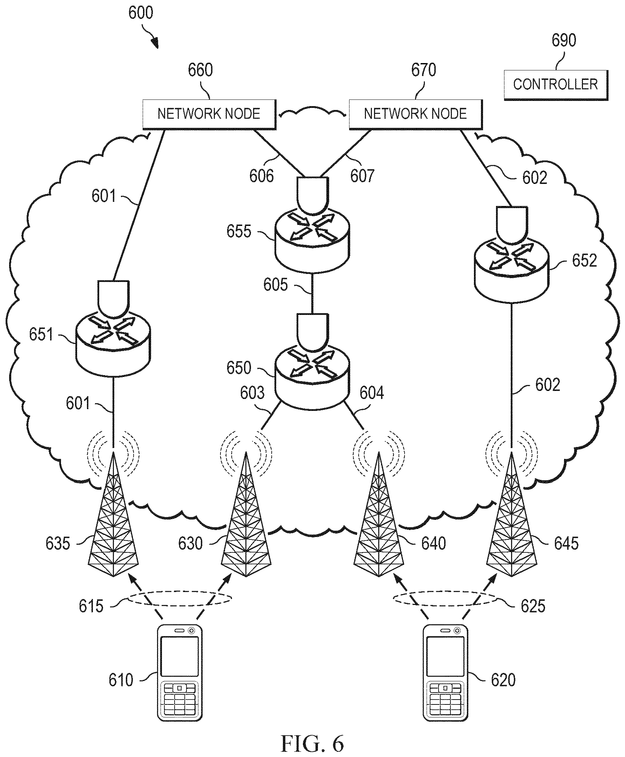

Embodiments of this disclosure may strategically schedule shared backhaul links to carry TBs obtained from different wireless transmissions. FIG. 6 illustrates an embodiment wireless network 600 for strategically scheduling a shared backhaul link 605 to carry TBs obtained from different wireless transmissions 615, 625. As shown, the wireless network 600 includes a backhaul network 609 for communicating data between access points (APs) 630, 635, 640, 645 and network nodes 660, 670. In this example, the APs 630, 635 perform lower-layer decoding on the wireless transmission 615 to obtain TBs carried by the wireless transmission 615, and then communicate the TBs over the backhaul network 609 to the network node 660, which performs RLC decoding on the TBs obtained from the wireless transmission 615. Likewise, the APs 640, 645 perform lower-layer decoding on the wireless transmission 625 to obtain TBs carried by the wireless transmission 625, and then communicate the TBs over the backhaul network 609 to the network node 670, which performs RLC decoding on the TBs obtained from the wireless transmission 625. It should be appreciated that the wireless network 600 is included herein for descriptive purposes, and that embodiment techniques provided by this disclosure may be implemented in wireless networks having a variety of different network topologies and/or configurations.

The backhaul network 609 includes intermediate nodes 650, 655 positioned in between the network nodes 660, 670 and the APs 630, 640, as well as an intermediate node 651 positioned in between the network nodes 660 and the AP 635, and an intermediate node 652 positioned in between the network nodes 670 and the AP 645. The backhaul network 609 further includes backhaul links 601-607. The AP 635 is interconnected to the network node 660 via a path extending over the backhaul links 601. The AP 645 is interconnected to the network node 670 via a path extending over the backhaul links 602.

The AP 630 is interconnected to the network node 660 via a path extending over the backhaul links 603, 605, 606. The AP 645 is interconnected to the network node 670 via a path extending over the backhaul links 604, 605, 607. The backhaul link 605 is shared between the paths interconnecting the APs 635, 645 to the network nodes 660, 670 (respectively), and is referred to as "the shared backhaul link" 605 throughout this disclosure. In some embodiments, the network nodes 660, 670 will coordinate the scheduling of TBs over the shared backhaul link 605. In other embodiments, the controller 690 will schedule TBs over the shared backhaul link 605.

In some embodiments, the network nodes 660, 670 or the controller 690 schedule TBs over the shared backhaul link 605 indirectly by communicating policy instructions to the access points 630, 640 and/or the intermediate node 650. The policy instructions may specify forwarding instructions for communicating TBs over the shared backhaul link 605, as well as other handling instructions, e.g., how long to buffer a TB, when to drop a TB, when to forward a TB, etc. The policy instructions may also specify handling instructions that are based on the characteristics of the TBs. For example, the policies may specify default handling instructions for TBs associated with a particular device (e.g., mobile devices, gateways) or a particular HARQ process number, or TBs that have been scheduled on specific resources, e.g., resource blocks, transmission time intervals (TTIs). The default handling instructions may specify that the TB is handled in a certain way (buffered/dropped/forwarded) when a condition is satisfied (e.g., after a threshold number of retransmission attempts, for packets having a certain payload size). The default handling instructions may be overridden by a backhaul scheduling order. The policy instructions may be communicated to the access points 630, 640 and/or the intermediate node 650 ahead of time, before the TBs are received at the access points 630, 640 and/or the intermediate node 650.

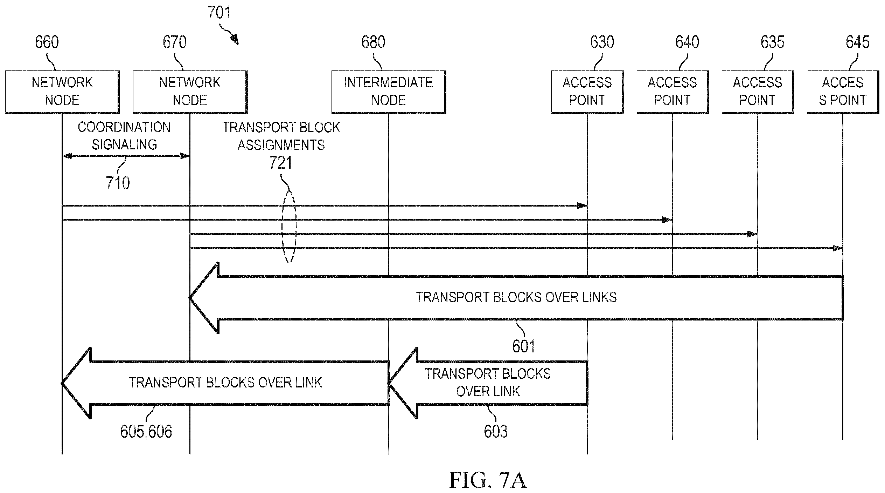

FIGS. 7A-7C illustrate protocol diagrams of embodiment communication sequences 701-703 for coordinating the scheduling of TBs over the shared backhaul link 605. Each of the embodiment communication sequences 701-703 begins by exchanging coordination signaling 710 between network nodes 660, 670. In some embodiments, the coordination signaling 710 may include a request to use or reserve resources of the shared backhaul link 605, or an instruction to use or reserve resources of the shared backhaul link 605. For instance, the network node 660 may send the network node 670 a request to schedule TBs carried by the wireless transmission 615 over the shared link 605. In one example, the coordination signaling 710 includes a request or instruction that a certain amount or percentage of resources (e.g., 10 percent, 50 percent, 100 percent) over the shared link 605 be scheduled to carry the TBs during a period. In another example, the coordination signaling 710 r includes a request or instruction that the TBs be scheduled over the shared link 605 such that a certain transmission rate (e.g., X bits per second) is supported/maintained. In yet another example, the coordination signaling 710 includes a request or instruction that as many resources as possible over the shared link 605 be scheduled to carry the TBs during a given period. In yet another example, the coordination signaling 710 requests that the shared link 605 only be scheduled to carry TBs of the wireless transmission 625 for purposes of recovery, e.g., if a specific TB or group of TBs is not successfully communicated over the links 602, then a recovery mechanism is implemented in which the specific TB or group of TBs is communicated over the links 604, 605, 607.

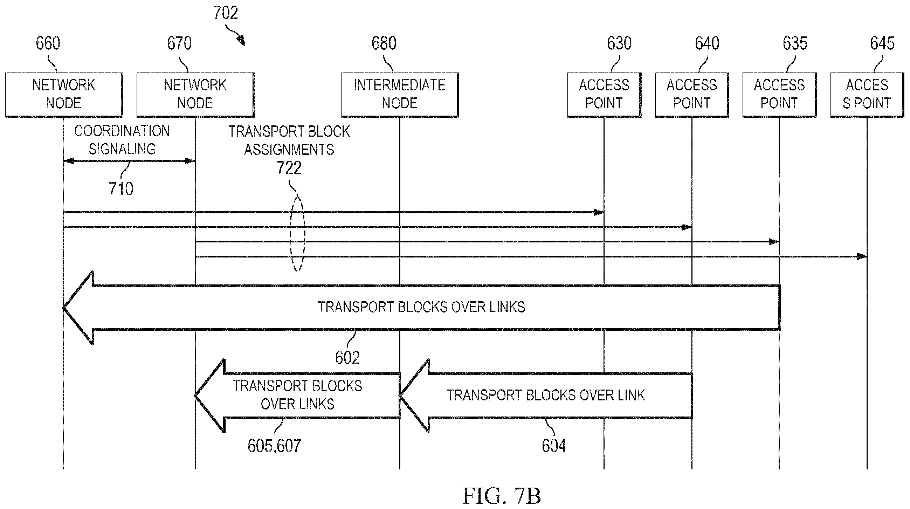

In some embodiments, all resources of a shared link may be scheduled to carry TBs from a single transmission. In the example depicted by FIG. 7A, the embodiment communication sequence 701 schedules all resources of the shared link 605 to carry TBs from the wireless transmission 615. Accordingly, transmission blocks carried by the wireless transmission 615 are transported from the AP 630 to the network node 660 via a path extending over the links 603, 605, and 606, while transmission blocks carried by the wireless transmission 625 are transported from the AP 645 to the network node 670 via a path extending over the links 601. Although not depicted in FIG. 7A, the AP 635 may communicate some transmission blocks carried by the wireless transmission 615 to the network node 660 over a path extending over the links 601 in some instances. In such instances, the transmission blocks communicated by the APs 630 and 635 may be mutually exclusive, partially redundant such that at least some TBs are communicated over both paths, or completely redundant such that all TBs are communicated over both paths. In another example (depicted by FIG. 7B), the embodiment communication sequence 702 schedules all of the resources of the shared link 605 to carry TBs from the wireless transmission 625. Accordingly, transmission blocks carried by the wireless transmission 625 are transported from the AP 640 to the network node 670 via a path extending over the links 604, 605, and 607, while transmission blocks carried by the wireless transmission 615 are transported from the AP 635 to the network node 660 via a path extending over the links 602.

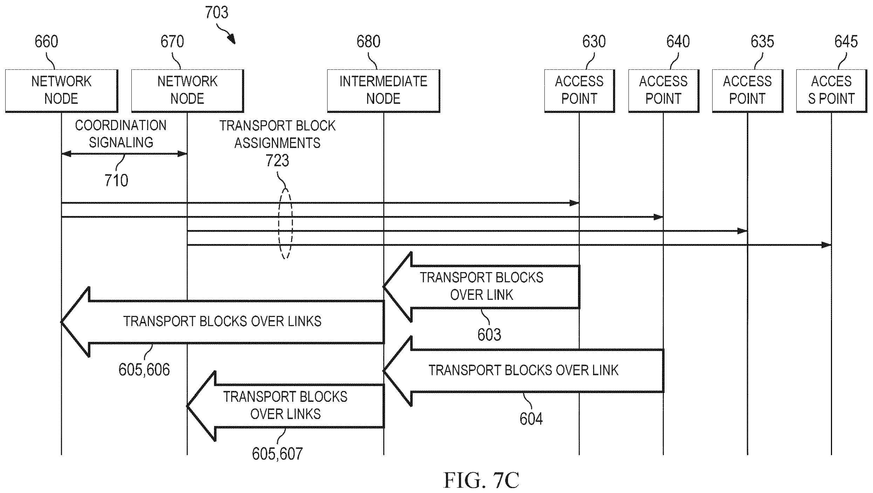

In other embodiments, resources of a shared link may be scheduled in a shared fashion such that the shared link transports TBs of different wireless transmissions during a common period. In the example depicted by FIG. 7C, the embodiment communication sequence 703 schedules some resources of the shared link 605 to carry TBs from the wireless transmission 615, while scheduling other resources of the shared link 605 to carry TBs from the wireless transmission 625. Accordingly, at least some transmission blocks carried by the wireless transmission 615 are transported from the AP 630 to the network node 660 via a path extending over the links 603, 605, and 606, while at least some transmission blocks carried by the wireless transmission 625 are transported from the AP 640 to the network node 670 via a path extending over the links 604, 605, and 607. Although not depicted in FIG. 7C, the APs 635, 645 may communicate some transmission blocks carried by the wireless transmissions 615, 625 (respectively) to the network nodes 660, 670 over paths extending over the links 601, 602. The set of transmission blocks transported over the links 601 may be mutually exclusive, partially redundant, or completely redundant with the set of transmission blocks transported over the links 603, 605, 606. Similarly, the set of transmission blocks transported over the links 602 may be mutually exclusive, partially redundant, or completely redundant with the set of transmission blocks transported over the links 604, 605, 607.

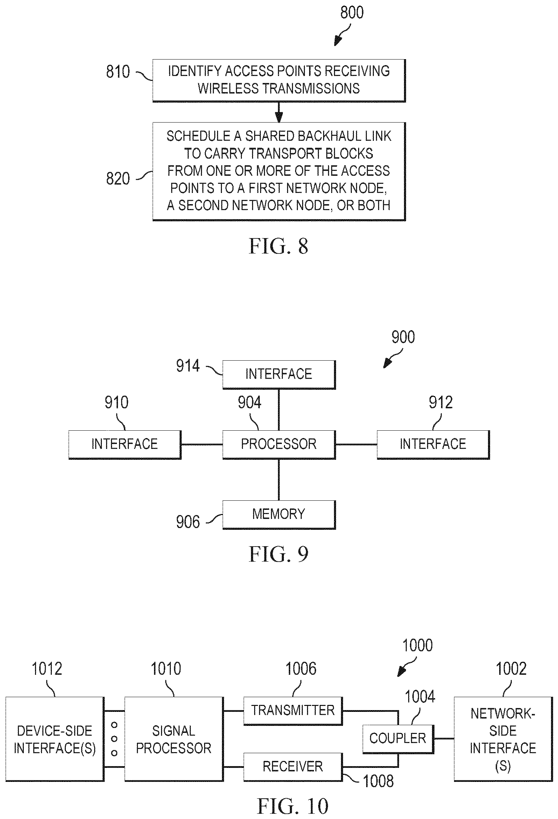

FIG. 8 illustrates a flowchart of an embodiment method 800 for scheduling TBs over a shared backhaul link, as might be performed by a controller. As shown, the method 800 begins at step 810, where the controller identifies access points receiving wireless transmissions. Next, the method 800 proceeds to step 820, where the controller schedules a shared backhaul link to carry TBs from one or more of the access points to a first network node, a second network node, or both.

FIG. 9 illustrates a block diagram of an embodiment processing system 900 for performing methods described herein, which may be installed in a host device. As shown, the processing system 900 includes a processor 904, a memory 906, and interfaces 910-914, which may (or may not) be arranged as shown in FIG. 9. The processor 904 may be any component or collection of components adapted to perform computations and/or other processing related tasks, and the memory 906 may be any component or collection of components adapted to store programming and/or instructions for execution by the processor 904. In an embodiment, the memory 906 includes a non-transitory computer readable medium. The interfaces 910, 912, 914 may be any component or collection of components that allow the processing system 900 to communicate with other devices/components and/or a user. For example, one or more of the interfaces 910, 912, 914 may be adapted to communicate data, control, or management messages from the processor 904 to applications installed on the host device and/or a remote device. As another example, one or more of the interfaces 910, 912, 914 may be adapted to allow a user or user device (e.g., personal computer (PC)) to interact/communicate with the processing system 900. The processing system 900 may include additional components not depicted in FIG. 9, such as long term storage (e.g., non-volatile memory).

In some embodiments, the processing system 900 is included in a network device that is accessing, or part otherwise of, a telecommunications network. In one example, the processing system 900 is in a network-side device in a wireless or wireline telecommunications network, such as an access point, a relay station, a scheduler, a controller, a gateway, a router, an applications server, or any other device in the telecommunications network. In other embodiments, the processing system 900 is in a user-side device accessing a wireless or wireline telecommunications network, such as a mobile station, a user equipment (UE), a personal computer (PC), a tablet, a wearable communications device (e.g., a smartwatch), or any other device adapted to access a telecommunications network.

In some embodiments, one or more of the interfaces 910, 912, 914 connects the processing system 900 to a transceiver adapted to transmit and receive signaling over the telecommunications network. FIG. 10 illustrates a block diagram of a transceiver 1000 adapted to transmit and receive signaling over a telecommunications network. The transceiver 1000 may be installed in a host device. As shown, the transceiver 1000 comprises a network-side interface 1002, a coupler 1004, a transmitter 1006, a receiver 1008, a signal processor 1010, and a device-side interface 1012. The network-side interface 1002 may include any component or collection of components adapted to transmit or receive signaling over a wireless or wireline telecommunications network. The coupler 1004 may include any component or collection of components adapted to facilitate bi-directional communication over the network-side interface 1002. The transmitter 1006 may include any component or collection of components (e.g., up-converter, power amplifier) adapted to convert a baseband signal into a modulated carrier signal suitable for transmission over the network-side interface 1002. The receiver 1008 may include any component or collection of components (e.g., down-converter, low noise amplifier) adapted to convert a carrier signal received over the network-side interface 1002 into a baseband signal. The signal processor 1010 may include any component or collection of components adapted to convert a baseband signal into a data signal suitable for communication over the device-side interface(s) 1012, or vice-versa. The device-side interface(s) 1012 may include any component or collection of components adapted to communicate data-signals between the signal processor 1010 and components within the host device (e.g., the processing system 900, local area network (LAN) ports).

The transceiver 1000 may transmit and receive signaling over any type of communications medium. In some embodiments, the transceiver 1000 transmits and receives signaling over a wireless medium. For example, the transceiver 1000 may be a wireless transceiver adapted to communicate in accordance with a wireless telecommunications protocol, such as a cellular protocol (e.g., long-term evolution (LTE)), a wireless local area network (WLAN) protocol (e.g., Wi-Fi), or any other type of wireless protocol (e.g., Bluetooth, near field communication (NFC)). In such embodiments, the network-side interface 1002 comprises one or more antenna/radiating elements. For example, the network-side interface 1002 may include a single antenna, multiple separate antennas, or a multi-antenna array configured for multi-layer communication, e.g., single input multiple output (SIMO), multiple input single output (MISO), multiple input multiple output (MIMO). In other embodiments, the transceiver 1000 transmits and receives signaling over a wireline medium, e.g., twisted-pair cable, coaxial cable, optical fiber. Specific processing systems and/or transceivers may utilize all of the components shown, or only a subset of the components, and levels of integration may vary from device to device.

Although the description has been described in detail, it should be understood that various changes, substitutions and alterations can be made without departing from the scope of this disclosure as defined by the appended claims. Moreover, the scope of the disclosure is not intended to be limited to the particular embodiments described herein, as one of ordinary skill in the art will readily appreciate from this disclosure that processes, machines, manufacture, compositions of matter, means, methods, or steps, presently existing or later to be developed, may perform substantially the same function or achieve substantially the same result as the corresponding embodiments described herein. Accordingly, the appended claims are intended to include within their scope such processes, machines, manufacture, compositions of matter, means, methods, or steps.

## Claims

1. A method for utilizing backhaul resources during multipoint reception performed by a controller (290), the method comprising:
• identifying access points (230, 240) receiving a wireless transmission (215) from a user equipment in accordance with a multipoint reception scheme, wherein the access points (230, 240) are access points at which a lower-layer decoding of the wireless transmissions (215) is performed to obtain radio link control, RLC, physical data units, PDUs, , wherein the lower-layer decoding is formed by a physical layer decoding decoding the wireless transmission into medium access control, MAC, PDUs together with a medium access control, MAC, layer decoding decoding the MAC PDUs into the RLC PDUs, and
• scheduling the RLC PDUs to be communicated from the access points (230, 240) over backhaul links (601-607) to a network node (660), wherein the network node (660) is a network node at which a radio link control, RLC, layer decoding of the RLC PDUs is performed for obtaining data packets,
wherein the scheduling the RLC PDUs over the backhaul links (601-607) comprises:
∘ instructing a first access point (230) among the identified access points (230, 240) to buffer a first RLC PDU among the RLC PDUs during a first period without sending the first RLC PDU over a first backhaul link, among the backhaul links (601-607), extending from the first access point (230) to the network node (660) during the first period.

2. The method of claim 1, wherein the instructing the first access point (230) to buffer the first RLC PDU during the first period comprises communicating a hold instruction from the network node (660) to the first access point (230).

3. The method of claim 2, wherein the hold instruction instructs the first access point (230) to buffer any RLC PDUs during the first period.

4. The method of claim 2, wherein the hold instruction instructs the first access point (230) to buffer all RLC PDUs decoded by the first access point (230) until further notice is provided by the network node (660), the hold instruction not specifically identifying the first RLC PDU.

5. The method of any one of claims 1 - 4, wherein scheduling the RLC PDUs over the backhaul links (601-607) further comprises:
determining whether the network node (660) has received the first RLC PDU from another access point (240) during the first period; and
instructing the first access point (230) to drop the first RLC PDU without sending the first RLC PDU over the first backhaul link (601) when the network node (660) received the first RLC PDU from the another access point (240).

6. A controller (290) comprising:
a processor (904); and
a computer readable storage medium storing programming for execution by the processor (904), the programming including instructions to:
• identify access points (230, 240) receiving a wireless transmission (215) from a user equipment in accordance with a multipoint reception scheme, wherein the access points (230, 240) are access points at which a lower-layer decoding of the wireless transmissions (215) is performed to obtain radio link control, RLC, physical data units, PDUs, wherein the lower-layer decoding is formed by a physical layer decoding decoding the wireless transmission into medium access control, MAC, PDUs together with a medium access control, MAC, layer decoding decoding the MAC PDUs into the RLC PDUs, and
• schedule the RLC PDUs to be communicated from the access points (230, 240) over backhaul links (601-607) to a network node (660), wherein the network node (660) is a network node at which a radio link control, RLC, layer decoding of the RLC PDUs is performed for obtaining data packets,
wherein the scheduling the RLC PDUs over the backhaul links (601-607) comprises:
∘ instructing a first access point (230) among the identified access points (230, 240) to buffer a first RLC PDU among the RLC PDUs during a first period without sending the first RLC PDU over a first backhaul link, among the backhaul links (601-607), extending from the first access point (230) to the network node (660) during the first period.

7. A method for utilizing backhaul resources performed by an access point (230), the method comprising:
• receiving a wireless transmission (215) from a user equipment;
• performing a lower layer decoding on the wireless transmission (215) to obtain transport blocks carried by the wireless transmission (215), wherein the lower-layer decoding is formed by a physical layer decoding decoding the wireless transmission into medium access control, MAC, PDUs together with a medium access control, MAC, layer decoding decoding the MAC PDUs into RLC PDUs;
• receiving a scheduling instruction from a controller, the scheduling instruction including instructions for communicating the RLC PDUs over a backhaul link (601) to a network node (660), wherein the network node (660) is a network node at which a radio link control, RLC, layer decoding of the RLC PDUs is performed for obtaining data packets; and
• communicating the RLC PDUs over the backhaul link (601) in accordance with the scheduling instruction, wherein the scheduling instruction comprises a hold instruction that instructs the access point (230) to buffer a first RLC PDU among the RLC PDUs during a first period without sending the first RLC PDU over the backhaul link (601) during the first period unless further notice is received from the controller.

8. The method of claim 7, wherein the communicating the RLC PDUs over the backhaul link (601) in accordance with the scheduling instruction comprises:
buffering the first RLC PDU;
transmitting the first RLC PDU over the backhaul link (601) when a send instruction is received prior to expiration of the first period; and
dropping the first RLC PDU when the first period expires without receiving the send instruction.

9. The method of claim 7, wherein the communicating the RLC PDUs over the backhaul link (601) in accordance with the scheduling instruction comprises:
buffering the first RLC PDU;
dropping the first RLC PDU when a drop instruction is received prior to expiration of the first period; and
transmitting the first RLC PDU over the backhaul link (601) when the first period expires without receiving the drop instruction.

10. The method of any one of claims 7 - 9, wherein the scheduling instruction comprises a drop instruction that instructs the access point (230) to drop the first RLC PDU.

11. An access point configured to perform any of the methods according to claims 7-10.

## Patentansprüche

1. Verfahren zum Nutzen von "Backhaul"-Ressourcen während eines Multipunktempfangs, das durch eine Steuerung (290) durchgeführt wird, wobei das Verfahren Folgendes umfasst:
- Identifizieren von Zugangspunkten (230, 240), die eine Drahtlosübertragung (215) von einem Benutzergerät gemäß einem Multipunktempfangsschema empfangen, wobei die Zugangspunkte (230, 240) Zugangspunkte sind, mit denen eine Decodierung niedrigerer Ebene der Drahtlosübertragungen (215) durchgeführt wird, um Funkverbindungssteuer- bzw. RLC(Radio Link Control)-Physische-Dateneinheiten bzw. -PDUs (Physical Data Units) zu erhalten, wobei die Decodierung niedrigerer Ebene durch eine Physische-Schicht-Decodierung, die die Drahtlosübertragung zu Medienzugriffssteuer- bzw. MAC(Medium Access Control)-PDUs decodiert, zusammen mit einer Medienzugriffssteuer- bzw. MAC-Schicht-Decodierung, die die MAC-PDUs zu RLC-PDUs decodiert, gebildet wird, und
- Planen, dass die RLC-PDUs von den Zugangspunkten (230, 240) über "Backhaul"-Verbindungen (601-607) zu einem Netzknoten (660) kommuniziert werden, wobei der Netzknoten (660) ein Netzknoten ist, bei dem eine Funkverbindungssteuer- bzw. RLC-Schicht-Decodierung der RLC-PDUs zum Erhalten von Datenpaketen durchgeführt wird,
wobei das Planen der RLC-PDUs über die "Backhaul"-Verbindungen (601-607) Folgendes umfasst:
∘ Anweisen eines ersten Zugangspunkts (230) unter den identifizierten Zugangspunkten (230, 240) zum Puffern einer ersten RLC-PDU unter den RLC-PDUs während einer ersten Periode ohne Senden der ersten RLC-PDU über eine erste "Backhaul"-Verbindung unter den "Backhaul"-Verbindungen (601-607), die sich während der ersten Periode von dem ersten Zugangspunkt (230) zu dem Netzknoten (660) erstrecken.

2. Verfahren nach Anspruch 1, wobei das Anweisen des ersten Zugangspunkts (230) zum Puffern der ersten RLC-PDU in der ersten Periode Kommunizieren einer Halteanweisung von dem Netzknoten (660) an den ersten Zugangspunkt (230) umfasst.

3. Verfahren nach Anspruch 2, wobei die Halteanweisung den ersten Zugangspunkt (230) zum Puffern beliebiger RLC-PDUs während der ersten Periode anweist.

4. Verfahren nach Anspruch 2, wobei die Halteeinweisung den ersten Zugangspunkt (230) zum Puffern sämtlicher RLC-PDUs, die durch den ersten Zugangspunkt (230) decodiert werden, bis eine weitere Meldung durch den Netzknoten (660) bereitgestellt wird, anweist, wobei die Halteanweisung die erste RLC-PDU nicht speziell identifiziert.

5. Verfahren nach einem der Ansprüche 1-4, wobei das Planen der RLC-GPUs über die "Backhaul"-Verbindungen (601-607) ferner Folgendes umfasst:
Bestimmen, ob der Netzknoten (660) die erste RLC-PDU während der ersten Periode von einem anderen Zugangspunkt (240) empfangen hat; und
Anweisen des ersten Zugangspunkts (230) zum Verwerfen der ersten RLC-PDU ohne Senden der ersten RLC-PDU über die erste "Backhaul"-Verbindung (601), wenn der Netzknoten (660) die erste RLC-PDU von dem anderen Zugangspunkt (240) empfangen hat.

6. Steuerung (290), die Folgendes umfasst:
einen Prozessor (904); und
ein computerlesbares Speicherungsmedium, das eine Programmierung zur Ausführung durch den Prozessor (904) speichert, wobei die Programmierung Anweisungen zu Folgendem beinhaltet:
- Identifizieren von Zugangspunkten (230, 240), die eine Drahtlosübertragung (215) von einem Benutzergerät gemäß einem Multipunktempfangsschema empfangen, wobei die Zugangspunkte (230, 240) Zugangspunkte sind, mit denen eine Decodierung niedrigerer Ebene der Drahtlosübertragungen (215) durchgeführt wird, um Funkverbindungssteuer- bzw. RLC-Physische-Dateneinheiten bzw. -PDUs zu erhalten, wobei die Decodierung niedrigerer Ebene durch eine Physische-Schicht-Decodierung, die die Drahtlosübertragung zu Medienzugriffssteuer- bzw. MAC-PDUs decodiert, zusammen mit einer Medienzugriffssteuer- bzw. MAC-Schicht-Decodierung, die die MAC-PDUs zu RLC-PDUs decodiert, gebildet wird, und
- Planen, dass die RLC-PDUs von den Zugangspunkten (230, 240) über "Backhaul"-Verbindungen (601-607) zu einem Netzknoten (660) kommuniziert werden, wobei der Netzknoten (660) ein Netzknoten ist, bei dem eine Funkverbindungssteuer- bzw. RLC-Schicht-Decodierung der RLC-PDUs zum Erhalten von Datenpaketen durchgeführt wird,
wobei das Planen der RLC-PDUs über die "Backhaul"-Verbindungen (601-607) Folgendes umfasst:
∘ Anweisen eines ersten Zugangspunkts (230) unter den identifizierten Zugangspunkten (230, 240) zum Puffern einer ersten RLC-PDU unter den RLC-PDUs während einer ersten Periode ohne Senden der ersten RLC-PDU über eine erste "Backhaul"-Verbindung unter den "Backhaul"-Verbindungen (601-607), die sich während der ersten Periode von dem ersten Zugangspunkt (230) zu den Netzknoten (660) erstrecken.

7. Verfahren zum Nutzen von "Backhaul"-Ressourcen, das durch einen Zugangspunkt (230) durchgeführt wird, wobei das Verfahren Folgendes umfasst:
- Empfangen einer Drahtlosübertragung (215) von einem Benutzergerät;
- Durchführen einer Decodierung niedrigerer Ebene an der Drahtlosübertragung (215), um Transportblöcke zu erhalten, die durch die Drahtlosübertragung (215) getragen werden, wobei die Decodierung niedrigerer Ebene durch eine Physische-Schicht-Decodierung, die die Drahtlosübertragung zu Medienzugriffssteuer- bzw. MAC-PDUs decodiert, zusammen mit einer Medienzugriffsteuer- bzw. MAC-Schicht-Decodierung, die die MAC-PDUs zu RLC-PDUs decodiert, gebildet wird;
- Empfangen einer Planungsanweisung von einer Steuerung, wobei die Planungsanweisung Anweisungen zum Kommunizieren der RLC-PDUs über eine "Backhaul"-Verbindung (601) an einen Netzknoten (660) beinhaltet, wobei der Netzknoten (660) ein Netzknoten ist, bei dem eine Funkverbindungssteuer- bzw. RLC-Schicht-Decodierung der RLC-PDUs zum Erhalten von Datenpaketen durchgeführt wird; und
- Kommunizieren der RLC-PDUs über die "Backhaul"-Verbindung (601) gemäß der Planungsanweisung, wobei die Planungsanweisung eine Halteanweisung umfasst, die den Zugangspunkt (230) zum Puffern einer ersten RLC-PDU unter den RLC-PDUs während einer ersten Periode ohne Senden der ersten RLC-PDU über die "Backhaul"-Verbindung (601) während der ersten Periode anweist, bis eine weitere Meldung von der Steuerung empfangen wird.

8. Verfahren nach Anspruch 7, wobei das Kommunizieren der RLC-PDUs über die "Backhaul"-Verbindung (601) gemäß der Planungsanweisung Folgendes umfasst:
Puffern der ersten RLC-PDU;
Übertragen der ersten RLC-PDU über die "Backhaul"-Verbindung (601), wenn eine Sendeanweisung vor dem Verstreichen der ersten Periode empfangen wird; und
Verwerfen der ersten RLC-PDU, wenn die erste Periode ohne Empfangen der Sendeanweisung verstreicht.

9. Verfahren nach Anspruch 7, wobei das Kommunizieren der RLC-PDUs über die "Backhaul"-Verbindung (601) gemäß der Planungsanweisung Folgendes umfasst:
Puffern der ersten RLC-PDU;
Verwerfen der ersten RLC-PDU, wenn eine Anweisung zum Verwerfen vor dem Verstreichen der ersten Periode empfangen wird; und
Übertragen der ersten RLC-PDU über die "Backhaul"-Verbindung (601), wenn die erste Periode ohne Empfangen der Anweisung zum Verwerfen verstreicht.

10. Verfahren nach einem der Ansprüche 7-9, wobei die Planungsanweisung eine Anweisung zum Verwerfen umfasst, die den Zugangspunkt (230) zum Verwerfen der ersten RLC-PDU anweist.

11. Zugangspunkt, der zum Durchführen beliebiger der Verfahren nach Ansprüchen 7-10 konfiguriert ist.

## Revendications

1. Procédé pour utiliser des ressources de liaison terrestre pendant une réception multipoint exécuté par un dispositif de commande (290), le procédé comprenant les étapes suivantes:
• identifier des points d'accès (230, 240) recevant une transmission sans fil (215) en provenance d'un équipement d'utilisateur conformément à un schéma de réception multipoint, dans lequel les points d'accès (230, 240) sont des points d'accès auxquels un décodage de couche inférieure des transmissions sans fil (215) est exécuté pour obtenir des unités de données physiques, PDU, de commande de liaison radio, RLC, dans lequel le décodage de couche inférieure est formé par un décodage de couche physique qui décode la transmission sans fil en PDU de commande d'accès au support, MAC, ainsi que par un décodage de couche de commande d'accès au support, MAC, qui décode les PDU de MAC en PDU de RLC, et
• programmer les PDU de RLC à communiquer à partir des points d'accès (230, 240) sur des liaisons terrestres (601-607) jusqu'à un nœud de réseau (660), dans lequel le nœud de réseau (660) est un nœud de réseau auquel un décodage de couche de commande de liaison radio, RLC, des PDU de RLC est exécuté pour obtenir des paquets de données,
dans lequel la programmation des PDU de RLC sur les liaisons terrestres (601-607) comprend l'étape suivante:
∘ donner l'instruction à un premier point d'accès (230) parmi les points d'accès identifiés (230, 240) de tamponner une première PDU de RLC parmi les PDU de RLC pendant une première période sans envoyer la première PDU de RLC sur une première liaison terrestre, parmi les liaisons terrestres (601-607), qui s'étend à partir du premier point d'accès (230) jusqu'au nœud de réseau (660) pendant la première période.

2. Procédé selon la revendication 1, dans lequel l'instruction donnée au premier point d'accès (230) de tamponner la première PDU de RLC pendant la première période comprend la communication d'une instruction de maintien du nœud de réseau (660) au premier point d'accès (230).

3. Procédé selon la revendication 2, dans lequel l'instruction de maintien donne l'instruction au premier point d'accès (230) de tamponner l'une quelconque des PDU de RLC pendant la première période.

4. Procédé selon la revendication 2, dans lequel l'instruction de maintien donne l'instruction au premier point d'accès (230) de tamponner toutes les PDU de RLC décodées par le premier point d'accès (230) jusqu'à ce qu'une nouvelle notification soit fournie par le nœud de réseau (660), l'instruction de maintien n'identifiant pas spécifiquement la première PDU de RLC.

5. Procédé selon l'une quelconque des revendications 1 à 4 dans lequel la programmation des PDU de RLC sur les liaisons terrestres (601-607) comprend en outre les étapes suivantes:
déterminer si le nœud de réseau (660) a reçu la première PDU de RLC à partir d'un autre point d'accès (240) pendant la première période; et
donner l'instruction au premier point d'accès (230) d'abandonner la première PDU de RLC sans envoyer la première PDU de RLC sur la première liaison terrestre (601) lorsque le nœud de réseau (660) a reçu la première PDU de RLC en provenance d'un autre point d'accès (240).

6. Dispositif de commande (290) comprenant:
un processeur (904); et
un support de stockage lisible par un ordinateur qui stocke un programme à exécuter par le processeur (904), le programme contenant des instructions pour:
• identifier des points d'accès (230, 240) recevant une transmission sans fil (215) en provenance d'un équipement d'utilisateur conformément à un schéma de réception multipoint, dans lequel les points d'accès (230, 240) sont des points d'accès auxquels un décodage de couche inférieure des transmissions sans fil (215) est exécuté pour obtenir des unités de données physiques, PDU, de commande de liaison radio, RLC, dans lequel le décodage de couche inférieure est formé par un décodage de couche physique qui décode la transmission sans fil en PDU de commande d'accès au support, MAC, de concert avec une commande d'accès au support, MAC, le décodage de couche décodant les PDU de MAC en PDU de RLC, et
• programmer les PDU de RLC à communiquer à partir des points d'accès (230, 240) sur des liaisons terrestres (601-607) jusqu'à un nœud de réseau (660), dans lequel le nœud de réseau (660) est un nœud de réseau auquel un décodage de couche de commande de liaison radio, RLC, des PDU de RLC est exécuté pour obtenir des paquets de données,
dans lequel la programmation des PDU de RLC sur les liaisons terrestres (601-607) comprend l'étape suivante:
∘ donner l'instruction à un premier point d'accès (230) parmi les points d'accès identifiés (230, 240) de tamponner une première PDU de RLC parmi les PDU de RLC pendant une première période sans envoyer la première PDU de RLC sur une première liaison terrestre, parmi les liaisons terrestres (601-607), qui s'étend à partir du premier point d'accès (230) jusqu'au nœud de réseau (660) pendant la première période.

7. Procédé pour utiliser des ressources de liaison terrestre exécuté par un point d'accès (230), le procédé comprenant les étapes suivantes:
• recevoir une transmission sans fil (215) en provenance d'un équipement d'utilisateur;
• exécuter un décodage de couche inférieure sur la transmission sans fil (215) afin d'obtenir des blocs de transport portés par la transmission sans fil (215), dans lequel le décodage de couche inférieure est formé par un décodage de couche physique qui décode la transmission sans fil en PDU de commande d'accès au support, MAC, ainsi que par un décodage de couche de commande d'accès au support, MAC, qui décode les PDU de MAC en PDU de RLC;
• recevoir une instruction de programmation en provenance d'un dispositif de commande, l'instruction de programmation contenant des instructions pour communiquer les PDU de RLC sur une liaison terrestre (601) à un nœud de réseau (660), dans lequel le nœud de réseau (660) est un nœud de réseau auquel un décodage de couche de commande de liaison radio, RLC, des PDU de RLC est exécuté pour obtenir des paquets de données; et
• communiquer les PDU de RLC sur la liaison terrestre (601) conformément à l'instruction de programmation, dans lequel l'instruction de programmation contient une instruction de maintien qui donne l'instruction au point d'accès (230) de tamponner une première PDU de RLC parmi les PDU de RLC pendant une première période sans envoyer la première PDU de RLC sur la liaison terrestre (601) pendant la première période jusqu'à ce qu'une nouvelle notification ait été reçue en provenance du dispositif de commande.

8. Procédé selon la revendication 7, dans lequel la communication des PDU de RLC sur la liaison terrestre (601) conformément à l'instruction de programmation comprend les étapes suivantes:
tamponner la première PDU de RLC ;
transmettre la première PDU de RLC sur la liaison terrestre (601) lorsqu'une instruction envoyée est reçue avant l'expiration de la première période; et
abandonner la première PDU de RLC lorsque la première période expire sans avoir reçu l'instruction envoyée.

9. Procédé selon la revendication 7, dans lequel la communication des PDU de RLC sur la liaison terrestre (601) conformément à l'instruction de programmation comprend les étapes suivantes:
tamponner la première PDU de RLC;
abandonner la première PDU de RLC lorsqu'une instruction d'abandon est reçue avant l'expiration de la première période; et
transmettre la première PDU de RLC sur la liaison terrestre (601) lorsque la première période a expiré sans avoir reçu l'instruction d'abandon.

10. Procédé selon l'une quelconque des revendications 7 à 9, dans lequel l'instruction de programmation contient une instruction d'abandon qui donne l'instruction au point d'accès (230) d'abandonner la première PDU de RLC.

11. Point d'accès configuré de manière à exécuter l'un quelconque des procédés selon les revendications 7 à 10.
